(19) Europäisches Patentamt / European Patent Office / Office européen des brevets

(11) **EP 3 077 780 B1**

(12) **FASCICULE DE BREVET EUROPEEN**

(45) Date de publication et mention de la délivrance du brevet:
**07.11.2018 Bulletin 2018/45**

(21) Numéro de dépôt: **14814945.3**

(22) Date de dépôt: **24.11.2014**

(51) Int Cl.:
**G01G 19/02** (2006.01)

(86) Numéro de dépôt international:
**PCT/FR2014/053008**

(87) Numéro de publication internationale:
**WO 2015/082797 (11.06.2015 Gazette 2015/23)**

(54) **PROCÉDÉ D'ESTIMATION DE LA MASSE D'UN VÉHICULE**

VERFAHREN ZUR SCHÄTZUNG DER MASSE EINES FAHRZEUGS

METHOD FOR ESTIMATING THE MASS OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2013 FR 1362176**

(43) Date de publication de la demande:
**12.10.2016 Bulletin 2016/41**

(73) Titulaire: **Renault s.a.s.**
**92100 Boulogne-Billancourt (FR)**

(72) Inventeur: **PITA-GIL, Guillermo**
**F-75014 Paris (FR)**

(56) Documents cités:
**DE-A1- 2 640 283    US-A1- 2011 267 200**

**Description**

La présente invention concerne de manière générale un procédé d'estimation de la masse totale d'un véhicule automobile. Plus particulièrement, l'invention concerne un procédé d'estimation de la masse totale d'un véhicule après chargement.

La connaissance de la masse totale d'un véhicule automobile est nécessaire au bon fonctionnement de nombreux dispositifs embarqués dans le véhicule, comme des systèmes d'amortissement, systèmes de détection de sous-gonflage, systèmes de contrôle moteur (électrique, thermique ou hybride), systèmes de démarrage en côte, systèmes de détection de surcharge, systèmes d'éclairage, systèmes de freinage et/ou de récupération d'énergie...

Le document US2011/0267200 divulgue un procédé de mesure de poids en cours de roulage d'un véhicule en passant sur une balance. Le document DE2640283 divulgue un appareil de détermination de poids d'un véhicule basé sur la mesure de l'enfoncement des suspensions des essieux. La demande de brevet déposée sous la référence FR-12-57425 divulgue un procédé d'estimation de la masse totale d'un véhicule à l'aide d'un dispositif de communication intelligent, dans lequel l'axe optique de l'appareil photo doit coïncider avec l'axe du centre de la roue. Ce procédé nécessite que l'utilisateur se baisse afin de faire coïncider l'axe optique et l'axe du centre de la roue et rend donc la manipulation mal aisée.

Un but de la présente invention est de répondre à l'inconvénient du document de l'art antérieur mentionné ci-dessus et en particulier de proposer un procédé d'estimation de la masse après chargement d'un véhicule automobile permettant à l'utilisateur de détecter aisément une surcharge de son véhicule sans nécessiter de manipulation particulière du dispositf de communication intelligent. L'invention devra, également, proposer un procédé nécessitant le moins possible de temps de calcul.

Pour cela un premier aspect de l'invention concerne un procédé d'estimation de la masse d'un véhicule automobile comprenant un train de roue avant et un train de roue arrière, au moyen d'un dispositif de communication intelligent, après chargement du véhicule, le procédé comprenant les étapes consistant à : (i) identifier le véhicule dans le dispositif de communication intelligent; (ii) prendre et traiter au moyen d'un appareil photographique du dispositif de communication intelligent, une photographie d'au moins une roue avec au moins un point du véhicule amené à s'enfoncer conjointement lors du chargement du véhicule avec la suspension de la roue du véhicule, après chargement, pour déterminer le débattement du train de la roue photographiée en fonction du véhicule identifié, la prise d'une photographie d'une roue est subordonnée au maintien du téléphone dans un plan perpendiculaire au plan de la roue photographiée sauf dans la position verticale du téléphone; (iii)déterminer le débattement du train opposé à la roue photographiée à l'étape (ii), soit par la mesure de l'angle d'inclinaison du véhicule après chargement, au moyen d'au moins un accéléromètre ou inclinomètre du dispositif de communication intelligent, soit par la prise et le traitement, au moyen de l'appareil photographique du dispositif de communication intelligent, d'une photographie d'au moins une roue avec au moins un point du véhicule amené à s'enfoncer conjointement lors du chargement du véhicule avec la suspension d'une roue du train opposé au train de la roue photographiée à l'étape (ii) ; (iv) calculer au moyen d'une unité de calcul du dispositif de communication intelligent, la valeur de charge sur le train de la roue photographiée et la valeur de charge sur le train opposé en fonction du débattement respectif de ces trains, pour déterminer la valeur de charge totale du véhicule ; (v) informer l'utilisateur au moyen du dispositif de communication intelligent de l'état de charge du véhicule.

Un tel procédé d'estimation de la charge du véhicule s'avère très simple et rapide à mettre en oeuvre pour un utilisateur disposant d'un dispositif de communication intelligent, comme par exemple un téléphone portable intelligent ou ordiphone, également dénommé Smartphone selon la terminologie anglaise équipé d'une application adéquate. Une telle solution présente permet à l'utilisateur de déterminer aisément le poid du véhicule, tout en étant fiable car ne dépendant pas d'élément dans le véhicule. Il permet ainsi à tout utilisateur de vérifier après chargement l'état de charge de son véhicule et prévenir tous risques de surcharge pouvant entraîner notamment une surconsommation, une tenue de route dégradée ou encore une infraction aux dispositions de sécurité prévues pour le modèle de véhicule considéré (notamment le poids total en charge ou PTAC).

Avantageusement, le traitement de la photographie peut comporter au moins une étape de calcul d'un invariant.

De manière avantageuse, le calcul de l'invariant peut être un birapport effectué sur au moins un point de la roue et au moins un point du véhicule amené à s'enfoncer conjointement lors du chargement du véhicule avec la suspension de la roue du véhicule.

Selon une variante, l'étape (i) d'identification du véhicule peut comprendre les étapes consistant à : (i.1) déterminer avant chargement la distance entre le centre de roue et le centre de passage de roue de la roue à photographier à l'étape (ii) ; (i.2) déterminer l'angle d'inclinaison du véhicule avant chargement ; (i.3) déterminer la charge totale admissible du véhicule identifié.

Selon une variante avantageuse, l'étape (ii) de prise et traitement d'image peut comprendre les sous étapes suivantes consistant à :

(ii.0) prendre une photographie d'une roue du véhicule ;

(ii.1) transformer la photographie de roue prise en une image en niveaux de gris ;

(ii.2) appliquer un premier filtre de type flou gaussien pour améliorer la qualité de piqué de l'image ;

(ii.3) appliquer un deuxième filtre de type Sobel pour obtenir les contours de l'image ;

(ii.4) décomposer l'image en deux parties, une première partie relative à la roue et une deuxième partie relative au passage de roue ;

(ii.5) calculer le centre et le rayon du passage de roue par le méthode des moindres carrés ;

(ii.6) calculer les valeurs de rayons minimum et maximum de la roue en fonction du rayon du passage de roue et du véhicule identifié ;

(ii.7) appliquer un troisième filtre de type ondelette chapeau mexicain pour améliorer la concentration de points proches du centre de la roue ;

(ii.8) calculer le centre de la roue en se basant sur l'accumulation de points dans le centre de la roue, calculer la distance après chargement entre le centre de roue et le centre de passage de roue, calculer le birapport dudit au moins un point de la roue et dudit au moins un point du véhicule amené à s'enfoncer conjointement lors du chargement du véhicule avec la suspension de la roue du véhicule ;

(ii.9) calculer le débattement du train de la roue photographiée au moyen de la différence de distance entre le centre de roue et le centre de passage de roue après et avant chargement.

Selon une autre variante de l'invention, l'étape (iii) de détermination du débattement du train opposé peut être basée sur une mesure de la différence de l'angle d'inclinaison du véhicule avant et après chargement, l'angle d'inclinaison étant choisi comme l'angle entre un repère terrestre et un repère véhicule selon l'axe X du véhicule.

L'étape (iii) de mesure de l'angle d'inclinaison, toute détection d'une accélération au-delà d'un certain seuil prédéfini peut être considérée comme une chute du dispositif de communication intelligent, l'étape (iii) de mesure devant être réitérée.

L'étape (iv) de calcul de la valeur de charge sur les trains de roue avant et arrière peut être obtenue par interpolation dans une cartographie charge / débattement.

Un autre aspect de l'invention concerne un dispositif de communication intelligent configuré pour permettre la mise en oeuvre du procédé selon l'une quelconque des revendications précédentes, caractérisé en ce que le dispositif de communication intelligent comprend

- une application programmée adaptée pour activer un procédé d'estimation de la masse d'un véhicule,

- une interface homme machine adaptée pour lancer l'application d'estimation de la masse d'un véhicule,

- des moyens d'identification du véhicule,

- un appareil photographique adapté pour prendre une photographie d'au moins une roue avec au moins un point du véhicule amené à s'enfoncer conjointement lors du chargement du véhicule avec la suspension de la roue du véhicule,

- au moins un accéléromètre et/ou inclinomètre adapté pour mesurer un angle d'inclinaison entre le repère terrestre et le repère véhicule,

- une unité de calcul programmée pour effectuer des étapes de traitement d'image et de calcul de valeurs de débattement et de valeurs de charge dont au moins une étape de calcul d'au moins un invariant, et

- au moins une interface graphique et/ou sonore adaptée pour avertir l'utilisateur de l'état de charge de son véhicule.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

- la figure 1 représente schématiquement un dispositif de communication intelligent selon un mode de réalisation de l'invention ;

- la figure 2 représente un diagramme du procédé d'estimation de la masse d'un véhicule selon un mode de réalisation de l'invention ;

- la figure 3 représente schématiquement le débattement des trains de roue avant et arrière suite au chargement du véhicule ;

- la figure 4 représente un diagramme détaillé de l'étape de traitement d'images selon un mode de réalisation de l'invention ;

- la figure 5 représente schématiquement l'acquisition par le dispositif de communication intelligent d'une image selon un mode de réalisation de l'invention;

- les figures 6A-6B représentent une image de la roue telle dans deux situation différentes ;

- la figure 7A représente un exemple de la loi charge/ débattement d'une suspension de roue pour un modèle prédéfini de véhicule ;

- la figure 7B représente les résultats expérimentaux de détermination de la charge totale d'un véhicule ;

- la figure 8 représente un exemple de définition des axes pour un dispositif de communication intelligent.

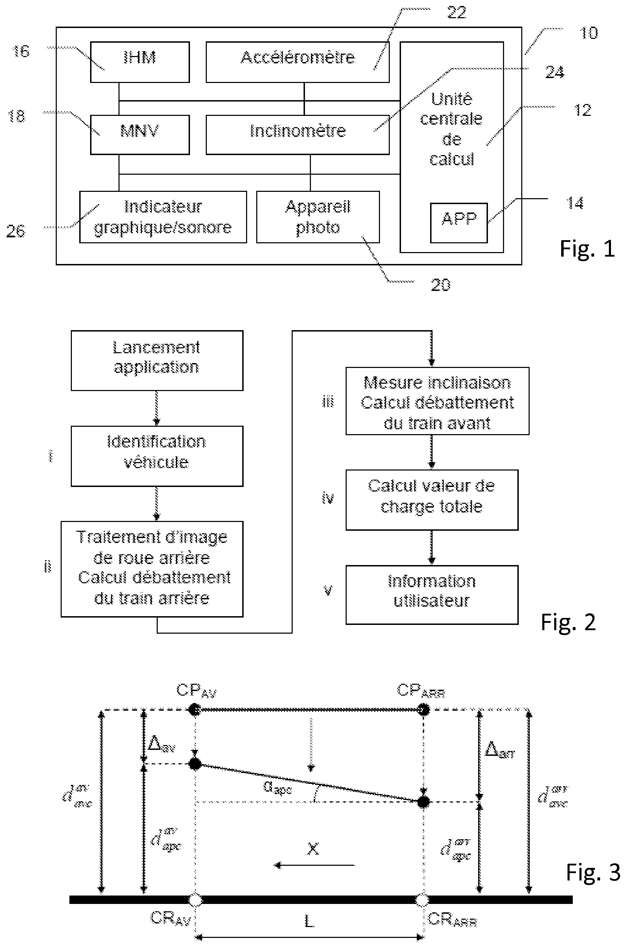

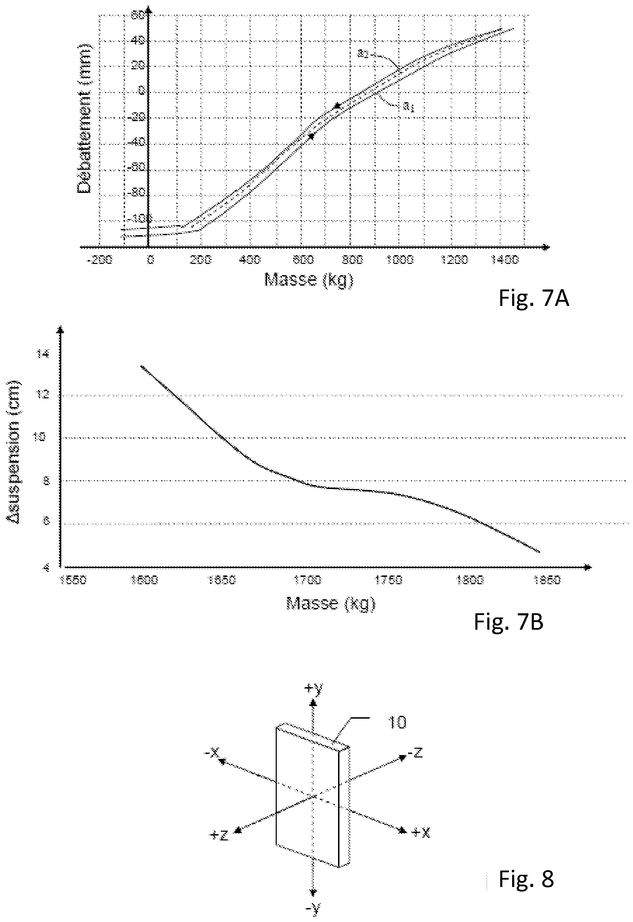

La figure 1 représente schématiquement un dispositif de communication intelligent selon un mode de réalisation de l'invention. Le dispositif de communication intelligent 10 comprend une unité centrale 12 programmable. Une application 14 d'estimation de la masse d'un véhicule est programmée sur cette unité centrale 12. Une interface homme machine 16 permet de lancer l'application 14 d'estimation de la masse d'un véhicule. Des moyens d'identification du véhicule sont prévus par exemple sous la forme d'une sélection via l'interface homme machine 16 d'un modèle de véhicule parmi une liste de modèles préenregistrés dans une mémoire non-volatile 18. Il est également prévu un appareil photographique 20 pour prendre une photographie d'au moins une roue du véhicule et au moins un accéléromètre 22 et/ou un inclinomètre 24 pour mesurer l'angle d'inclinaison du dispositif de communication intelligent, l'unité centrale 12 étant programmée pour effectuer des étapes de traitement d'image et de calcul de valeurs de débattement et de valeurs de charge. Il est prévu en outre au moins une interface graphique et/ou sonore 26 pour avertir l'utilisateur de l'état de charge de son véhicule. Cette interface graphique et/ou sonore 26 peut être partiellement ou complètement liée à l'interface homme machine 16. A titre d'information, les axes x, y et z tels que généralement définis pour un tel dispositif de communication sont représentés à la figure 8.

La figure 2 représente un diagramme du procédé d'estimation de la masse d'un véhicule selon un mode de réalisation de l'invention. Une étape préliminaire consiste à lancer l'application d'estimation de la charge d'un véhicule.

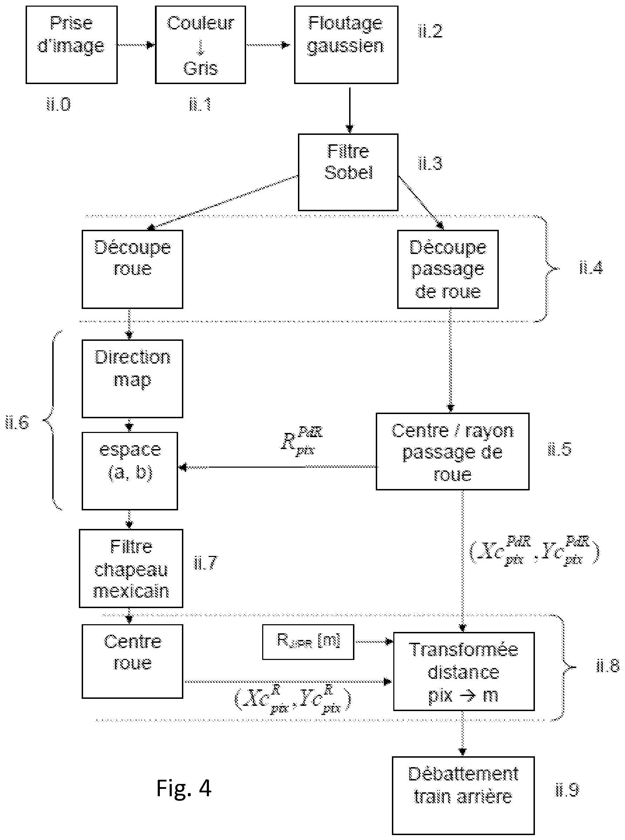

Une fois l'application lancée, afin de pouvoir estimer la masse du véhicule, l'utilisateur doit lors d'une première étape (i) identifier son véhicule. Pour ce faire, il pourra par exemple être invité à travers l'interface homme machine à sélectionner son modèle de véhicule dans une liste préenregistrée. Le modèle de véhicule préenregistré devra comprendre au moins les informations relatives à la distance entre le centre de roue et le centre de passage de roue de la roue à photographier (étape i.1) ainsi que la charge totale admissible pour ce modèle de véhicule (étape i.3). Alternativement, la détermination de la distance entre le centre de roue et le centre de passage de roue de la roue à photographier (étape i.1) peut être réalisée manuellement par la prise d'une photographie d'une roue du véhicule avant chargement dont le traitement ultérieur sera similaire à celui explicité en détail à la figure 4 pour ce qui concerne les étapes (ii.1) à (ii.8). Additionnellement, l'identification du véhicule pourra comprendre la détermination d'un angle d'inclinaison du véhicule avant son chargement (étape i.2). Cette mesure d'inclinaison sera de préférence faite selon l'axe X du véhicule, c'est-à-dire selon l'axe longitudinal du véhicule, entre le repère terrestre (lié à la gravité) et le repère véhicule (lié au véhicule). Pour ce faire, le dispositif de communication intelligent sera de préférence positionné sur un emplacement dans le véhicule prévu à cet effet, par exemple sous la forme d'une station d'accueil dont l'orientation est connue.

Lors d'une deuxième étape (ii), l'utilisateur est invité à prendre une photographie d'au moins une roue de son véhicule après chargement. De préférence, l'utilisateur est invité à prendre une photographie d'une roue située du côté de l'espace de chargement. Ainsi, pour la plupart des véhicules, l'espace de chargement étant situé à l'arrière du véhicule, l'utilisateur sera invité à prendre une photographie d'une roue arrière de son véhicule. Cette photographie est ensuite traitée selon un procédé de traitement d'image dont le détail est fourni en relation avec la figure 4. Sur la base du traitement d'image effectué, l'application détermine le débattement du train de la roue photographiée, à savoir en général le débattement du train arrière.

Lors d'une troisième étape (iii), l'utilisateur positionnera de préférence le dispositif de communication intelligent dans sa station d'accueil pour effectuer au moins une mesure de l'inclinaison selon l'axe X du véhicule entre le repère terrestre et le repère véhicule après chargement du véhicule. On prévoira à cet effet de positionner correctement le dispositif de communication sur l'emplacement pour s'assurer que l'inclinaison mesurée est bien celle selon l'axe X du véhicule. Si une mesure similaire a été effectuée avant le chargement lors de l'identification du véhicule, cela permettra de calculer précisément la différence d'inclinaison avant et après chargement, afin de compenser une éventuelle déclivité du sol sur lequel le véhicule est stationné lors de son chargement. Sur la base de l'inclinaison mesurée après chargement et avantageusement avant et après chargement, l'application détermine le débattement du train opposé à celui de la roue photographiée, par exemple le train avant.

Lors d'une quatrième étape (iv), l'application calcule la valeur de charge sur les trains avant et arrière du véhicule et en déduit la valeur de charge totale du véhicule par addition des deux charges. Cette valeur de charge totale peut être alors affichée par le dispositif de communication.

Lors d'une cinquième étape (v), l'application commande l'interface graphique et/ou sonore du dispositif de communication pour avertir l'utilisateur sur l'état de charge du véhicule. Ainsi par exemple, le dispositif de communication affiche une alerte rouge si la masse est supérieure à 0,95*massemax, où massemax est une constante de calibration correspondant à la charge maximale autorisée. Le dispositif affiche une alerte jaune si la masse est comprise entre 0,8*massemax et 0,95*massemax. Le dispositif affiche une alerte verte si la masse est inférieure à 0,8*massemax. Les niveaux 0,8 et 0,95 sont 2 seuils qui sont également des paramètres de calibration. Ils peuvent bien entendu être modifiés suivant les besoins. Le nombre de niveaux d'alerte peut être variable et dépende du type d'application. On peut également afficher la probabilité de surcharge ou la charge et l'intervalle de confiance à 95 ou 99% (par exemple).

La figure 3 représente schématiquement le débattement des trains de roue avant $\Delta_{AV}$ et arrière $\Delta_{ARR}$ suite au chargement du véhicule. Dans l'exemple représenté à la figure, le véhicule est stationné sur un sol horizontal. Le véhicule est représenté schématiquement par deux points représentant les centres de roue avant $CR_{AV}$ et arrière $CR_{ARR}$ du véhicule, ainsi que par les centres de passage de roue du véhicule avant $CP_{AV}$ et arrière $CP_{ARR}$, ces points permettant de déterminer les débattements des trains du véhicule. Toutefois on comprendra que l'on pourrait considérer d'autres points du véhicule que les centres de passages de roue, autres points qui seraient amenés à s'enfoncer conjointement avec la suspension de la roue lors du chargement du véhicule. La distance entre les centres de roue avant $CR_{AV}$ et arrière $CR_{ARR}$ du véhicule est l'empattement L du véhicule.

Par ailleurs, on entendra de manière générale par débattement, la distance correspondant à l'oscillation verticale d'un essieu par rapport au châssis, due à la flexibilité de la suspension lors du chargement. Dans la suite de cet exemple, le débattement correspondra à l'oscillation verticale du centre de passage de roue par rapport au centre de roue correspondant.

Avant chargement, l'identification permet de déterminer notamment la distance arrière avant chargement $d_{avc}^{arr}$ entre le centre de roue $CR_{ARR}$ et le centre de passage de roue $CP_{ARR}$ en particulier dans le cas où l'espace de chargement est situé à l'arrière du véhicule, ainsi qu'éventuellement l'angle d'inclinaison selon l'axe X du véhicule entre le repère terrestre et le repère véhicule s'il est non nul. Cette mesure pourra être automatiquement réalisée et enregistrée par le dispositif de communication intelligent si celui-ci détecte une inclinaison non nulle lors de l'étape d'identification initiale.

Au cours de l'étape (iii) qui sera détaillée ci-après en relation avec la figure 4, le dispositif de communication détermine la distance arrière après chargement $d_{apc}^{arr}$ entre le centre de roue $CR_{ARR}$ et le centre de passage de roue $CP_{ARR}$ qui s'est enfoncé.

Au cours de l'étape (iv), le dispositif de communication calcule le débattement du train opposé à la roue photographiée, c'est-à-dire le train avant dans notre exemple. Pour ce faire, le dispositif de communication est placé de préférence dans la station d'accueil prévue à cet effet dans le véhicule. Lorsque le dispositif de communication est dans la position prédéfinie, alors il peut automatiquement ou manuellement (i.e. sur action de l'utilisateur) réaliser une mesure de l'inclinaison du véhicule. Ainsi par exemple, pendant 3 secondes le dispositif de communication moyenne les 3 composantes mesurées par son accéléromètre. On obtient les valeurs gxiPh, gyiPh et gziPh. Dans le cas où le dispositif de communication tombe pendant les 3 secondes de mesure, au moins une des composantes de l'accélération dépasse 1,5g, et l'on estime alors que le dispositif a bougé et que la mesure doit être refaite. On pourra procéder de même si une des vitesses angulaires dépasse en valeur absolue le seuil de 0,1 rad/s. Avantageusement, le dispositif de communication affiche une barre de progression, pendant la mesure. Pendant cette mesure, il doit vérifier également que le dispositif de communication est tenu dans le bon sens, ce qui peut se traduire par une valeur négative des paramètres gyiPh et gziPh..

Lorsque le calcul est terminé, le dispositif de communication estime l'angle d'inclinaison après chargement $\alpha_{apc}$ selon l'axe X du véhicule entre le repère terrestre et le repère véhicule en calculant par exemple :

$$\alpha_{apc} = 0.5\left(a\cos\left(|gyiPh|\right) + a\sin\left(|gziPh|\right)\right)$$

Le dispositif de communication déduit ensuite la distance avant $d_{apc}^{av}$ après chargement, entre le centre de roue $CR_{AV}$ et le centre de passage de roue $CP_{AV}$ qui est enfoncé par application de la formule suivante :

$$d_{apc}^{av} = d_{apc}^{arr} + L.\tan(\alpha_{apc})$$

Dans le cas où l'on veut tenir compte de la déclivité du sol, on pourra utiliser la formule générale suivante :

$$d_{apc}^{av} = d_{apc}^{arr} - L.\tan(\Delta\alpha)$$

où $\Delta\alpha$; = $\alpha_{avc}$ - $\alpha_{apc}$; $\alpha_{avc}$ étant l'inclinaison avant chargement définie lors de l'identification du véhicule. L est l'empattement du véhicule également défini lors de l'identification du véhicule.

La figure 4 représente un diagramme détaillé de l'étape (ii) de prise et traitement d'images selon un mode de réalisation préféré de l'invention.

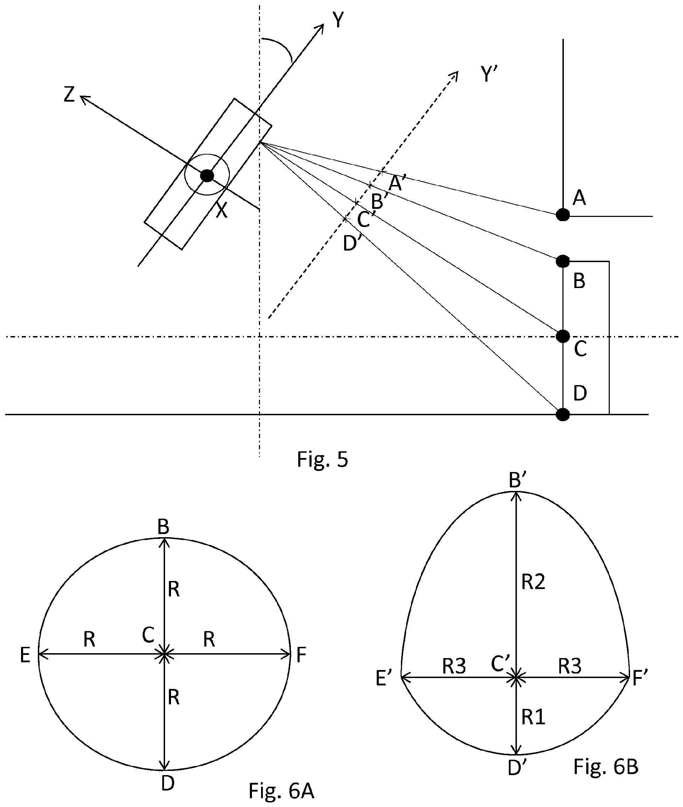

Comme cela a été indiqué plus haut, l'utilisateur est invité par l'application à prendre une photographie (étape ii.0) d'au moins une roue de son véhicule, par exemple une roue arrière. La prise de photo sera réalisée dans des conditions telles que représentées à la figure 5, i.e. lorsque les mesures des accéléromètres qu'il comprend indiquent une composante x presque nulle, une composante z<0 et une composante y<0 (téléphone non inversé). Les composantes x, y et z du dispositif de communication intelligent sont représentées aux figures 5 et 8.

Un signal lumineux et/ou sonore et/ou par vibration peut indiquer à l'utilisateur la vérification de ces conditions afin qu'il puisse déclencher la prise de vue. En variante il peut être prévu une prise automatique de la photographie lorsque les conditions sont satisfaites.

Deux cas de figures se présentent alors :

- le cas de figure où la composante z est presque nulle (non représentées, condition où le le dispositif de communication est dans une position verticale), alors l'image acquise est celle représentée à la figure 6A, cette configuration permet d'avoir une mesure direct des distances entre les différents points après traitement de l'image, mais cela contraint l'utilisateur à faire coincider l'axe optique de l'appareil photo avec celui du centre de la roue,

- le cas de figure où la composante z>0 (figure 5), alors l'image acquise est celle représentée à la figure 6B, cette configuration introduit une distortion de l'image acquise et par conséquent ne permet pas d'avoir une mesure direct, cette situation est une situation plus ergonomique pour l'utilisateur car la photo peut être prise debout.

Comme représenté à la figure 5, l'acquisition d'une image comportant au moins un point A du véhicule amené à s'enfoncer conjointement lors du chargement du véhicule avec la suspension de la roue du véhicule et plusieurs point de la roue B, C, D ,E , F (les points E et F n'étant pas représentés sur la figure 5 pour des raisont de clarté) se fait sur un plan y', qui est le plan focale de l'appareil photo 20. Le plan y' n'est pas parrallèle au plan verticale sur lequel les points sont alignés ce qui induit l'effet de disortion de l'image, comme représentée à la figure 6B. Les points acquient de la sorte, sur le plan y', sont instanciés B', C', D', E', F' sur la figure 6B.

Ensuite, le dispositif de communication entame le traitement de la photographie de la roue arrière effectuée par l'utilisateur de manière à permettre de calculer le débattement de la suspension correspondante. Une fois que la photographie est prise, si le dispositif de communication n'offre pas la possibilité de prendre directement la photographie en échelle de gris, alors la photographie est transformée en échelle de gris. (étape ii.1, seulement si nécessaire) Cette transformation pourra être réalisée par exemple avec les poids suivants appliqués sur chaque niveau RGB du signal:

*image_gris = 0.3\*photo_red + 0.59\*photo_green + 0.11\*photo_blue ;*

où photo_red est l'intensité lumineuse rouge, photo_green est l'intensité lumineuse verte, et photo_blue est l'intensité lumineuse bleue. Une fois l'image transformée en échelle de gris, le traitement commence par un floutage de l'image avec un filtre de type gaussien (étape ii.2). Ce traitement permet de réduire les gradients d'image artificiels, défauts, etc.

Ensuite, on applique un filtrage de type « Sobel » (étape ii.3) qui calcule la dérivée de l'image dans le sens de la largeur et de la hauteur puis les combine. Ce traitement permet d'obtenir les contours présents dans l'image.

Dans la suite, on décompose l'image en deux parties : le passage de roue et la roue (étape ii.4).

Avec la découpe du passage de roue on calcule par moindres carrés (étape ii.5) le cercle qui contient les points qui constituent le contour. On obtient ainsi le centre $(Xc_{pix}^{PdR}, Yc_{pix}^{PdR})$ et le rayon $R_{pix}^{PdR}$ du passage de roue en pixels. On déduit ainsi le point A'.

Avec la découpe de la roue on commence par calculer le « direction map », qui est une matrice qui contient les directions normales au gradient d'intensité calculé lors du filtrage de Sobel. Ensuite on cumule dans l'image les points dans la direction indiquée par ce vecteur et dont la distance varie entre r_min et r_max. Ces valeurs r_min et r_max sont calculées (étape ii.6) grâce à la valeur du rayon $R_{pix}^{PdR}$ du passage de roue estimé dans l'étape précédente en pixels et le rapport théorique $R_{J/PR}$ (connu) entre le rayon de la jante et le rayon du passage de roue. On déduit ainsi les points B', D'.

On continue le traitement en filtrant l'image résultante avec un filtre de type mexican hat ou ondelette chapeau mexicain (étape ii.7), semblable à un sinus cardinal. Ceci permet d'améliorer la concentration de points proches du centre de la roue.

On calcule (étape ii.8) ensuite le centre de la roue $\left(Xc_{pix}^{R}, Yc_{pix}^{R}\right)$ en se basant sur l'accumulation de points dans le centre de roue. On déduit ainsi le point C'.

Dans le cadre de la présente invention, d'autres traitements d'images peuvent être utilisés pour définir le centre de roue ainsi que le centre de passage de roue.

A ce stade, il est possible de connaître la valeur du débattement C'A' avec la distorsion hors cette valeur n'est pas la valeur réelle du débattement. Pour se faire, on applique le biraport, théorie des invariants en géometrie euclidienne.

Un invariant d'une transformation donnée est une propriété qui reste inchangée si l'on applique une ou plusieurs fois la transformation en question. Par exemple, dans le cadre de la géométrie Euclidienne, la distance est un invariant par rapport à une transformation de type rotation ou translation. De même, l'angle est aussi un invariant dans la géométrie euclidienne par rapport aux translations et aux rotations.

Dans le cadre de l'algèbre des transformations de type projections, un des invariants est le birapport. Soient 4 points alignés $P_1$, $P_2$, $P_3$, et $P_4$, le birapport (crossratio en anglais) est définit comme :

$$\beta\left(P_1, P_2, P_3, P_4\right) = \frac{\overline{P_1 P_3} \cdot \overline{P_2 P_4}}{\overline{P_1 P_4} \cdot \overline{P_2 P_3}}$$

Nous allons utiliser le birapport que nous avons définit ci-dessus. En exprimant sa valeur dans l'image projetée et dans le plan de la roue on obtient :

$$\begin{cases} \beta\left(D', C', B', A'\right) = \dfrac{\overline{D'B'} \cdot \overline{C'A'}}{\overline{D'A'} \cdot \overline{C'B'}} \\ \beta\left(D, C, B, A\right) = \dfrac{\overline{DB} \cdot \overline{CA}}{\overline{DA} \cdot \overline{CB}} \end{cases}$$

De plus, on sait que le birapport est un invariant des transformations de type projections d'où :

$$\beta\left(D', C', B', A'\right) = \beta\left(D, C, B, A\right)$$

Donc,

$$\frac{\overline{D'B'} \cdot \overline{C'A'}}{\overline{D'A'} \cdot \overline{C'B'}} = \frac{\overline{DB} \cdot \overline{CA}}{\overline{DA} \cdot \overline{CB}}$$

On calcule le birapport $\beta(D', C', B', A')$ que l'on appellera P. On sait aussi que $\overline{DB} = 2R$, que $\overline{CB} = R$ et que $\overline{DA} = 2R + \overline{CA}$. Ce qui nous donne l'équation suivante :

$$P = \frac{2R \cdot \overline{CA}}{(R + \overline{CA}) \cdot R}$$

Qui nous permet finalement de retrouver la distance entre le centre de la roue et le point haut du passage de roue sur le plan de la roue :

$$\overline{CA} = \frac{PR}{2-P}$$

Le calcul du birapport est particulièrement avantageux car il ne nécessite pas de temps de calcul trop important, contrairement à d'autres procédé de traitement d'image comportant de la distortion.

Pour conclure le traitement on calcule la distance en pixels entre le centre roue et le centre du passage de roue puis on le convertit en mètres grâce au rapport entre le rayon du passage de roue en pixels et en mètres (le théorique).

Les résultats expérimentaux sont visibles à la Figure 7B. Le résultat des calculs est la distance $d_{apc}^{arr}$ entre le centre de la roue et le centre du passage de roue après chargement. Plus le véhicule est chargé, plus cette distance est faible.

Dès lors, une étape initiale d'étalonnage en usine permet d'établir une cartographie donnant cette distance $d_{apc}^{arr}$ en fonction d'un poids connu du véhicule, permettant, par la suite de connaître ce poids par l'estimation de $d_{apc}^{arr}$.

On peut imaginer des versions plus évoluées de l'application, dans laquelle il est demandé à l'utilisateur de prendre en photo les deux roues arrière pour calculer une distance $d_{apc}^{arr}$ qui soit la moyenne entre les deux roues.

Toutefois, afin de tenir compte du vieillissement, et notamment des phénomènes de fluage dans la liaison entre le châssis et les suspensions, l'application en déduit ensuite (étape ii.9) le débattement du train arrière en effectuant l'opération suivante

$$\Delta d_{arr} = d_{avc}^{arr} - d_{apc}^{arr}$$

où, $d_{avc}^{arr}$ représente la distance arrière avant chargement (à vide). Cette valeur sera déduite lors de la phase d'identification du véhicule : par exemple soit en demandant à l'utilisateur de prendre en photo le véhicule à vide, soit en ayant accès à une base de données et en l'interrogeant avec l'identifiant du véhicule.

Il pourra être demandé à l'utilisateur de prendre régulièrement en photo le véhicule à vide (par exemple une à deux fois par an), afin de tenir compte des variations de cette distance à vide liée essentiellement au vieillissement des différents éléments des suspensions.

La figure 7A représente un exemple de la loi charge / débattement d'une suspension de roue pour un modèle prédéfini de véhicule. La valeur de débattement arrière obtenue à l'issue de l'étape (ii) de traitement permet lors de l'étape de calculer en interpolant dans une cartographie (comme par exemple celle représentée sur la figure 7A) la valeur de la charge sur le train arrière.

Cette figure présente une hystérésis : lorsque le véhicule est chargé progressivement, le débattement suit la courbe $a_1$, alors que lorsque le véhicule est déchargé, la relation suit la courbe $a_2$.

Afin de limiter les incertitudes, la courbe médiane, illustrée en pointillés, est utilisée.

Selon une autre mode de réalisation de l'invention, il est demandé à l'utilisateur de prendre en photo les quatre roues du véhicule, ce qui permet d'augmenter la précision de l'estimation de masse, par une meilleure évaluation des conditions de chargement notamment.

La prise photographique de chacune des roues et le traitement d'images tel qu'il a été défini, ou tout autre traitement d'image conduisant à la détermination des centres de roues et centres de passage de roues, permettent alors de déterminer pour chaque train, le débattement de chaque roue. Lors de l'identification du véhicule, si une détermination du débattement de chaque roue est prévu, nécessitant ainsi la prise photographique de chacune des roues, il n'est alors plus nécessaire de déterminer les angles d'inclinaison longitudinal et transversal du véhicule, le débattement sans charge de chacune des roues n'étant alors lié qu'aux caractéristiques connues du véhicule, et de la pente de la chaussée, qui peut donc être facilement déterminée, par exemple par interpolation des débattements connus sur sol plat.

Une variante simplifée consiste à ne mesurer que l'une des roues de chaque train pour la détermination du débattement des trains.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

Notamment, l'identification du véhicule pourra être basé sur l'utilisation du VIN (pour « Vehicle Identification Number»), qui est le code alphanumérique unique donné à chaque véhicule. L'utilisation du VIN peut permettre d'obtenir, à partir d'un serveur centralisé, les paramètres nécessaires aux différents calculs.

Ce VIN pourait être obtenu par une requête envoyée par le dispositif de communication intelligent à la voiture, par exemple par l'intermédiaire de l'interface de diagnostique OBD (pour « On Board Diagnostic »), la réponse pouvant alors être transmise à son tour à une base de données, qui renverrait les paramètres nécessaires aux différents calculs.

Par ailleurs, afin d'améliorer la précision du dispositif, lors de l'étape d'identification du véhicule (étape (iii)), où il est demandé à l'utilisateur de positionner le dispositif de communication intelligent dans sa station d'accueil pour effectuer au moins une mesure de l'inclinaison selon l'axe X du véhicule entre le repère terrestre et le repère véhicule avant chargement du véhicule, il est avantageusement prévu de déterminer également l'inclinaison selon l'axe Y du véhicule (inclinaison transversale), afin de corriger les déterminations ultérieures de distance entre le centre de passage de roue et le centre de roue, de cette inclinaison.

Avantageusement, il sera également prévu, lors de la détermination de l'inclinaison après chargement selon l'axe X, de déterminer l'inclinaison selon l'axe Y, cette détermination se couplant avantageusement avec la mesure d'une seule roue de chaque train.

Ainsi, la différence d'inclinaison est mesurée avec davantage de précision.

L'inclinaison selon l'axe Y du véhicule peut être due à un sol en dévers, mais peut également intervenir lorsque le véhicule est garé avec l'une des roues, ou les deux roues d'un même côté, disposée(s) sur un trottoir, les deux autres roues étant sur la chaussée.

## Revendications

1. Procédé d'estimation de la masse d'un véhicule automobile comprenant un train de roue avant et un train de roue arrière, au moyen d'un téléphone intelligent, après chargement du véhicule, le procédé comprenant les étapes consistant à :

   (i) identifier le véhicule dans le téléphone intelligent;
   (ii) prendre et traiter au moyen d'un appareil photographique du téléphone intelligent, une photographie d'au moins une roue avec au moins un point du véhicule amené à s'enfoncer conjointement lors du chargement du véhicule avec la suspension de la roue du véhicule, après chargement, pour déterminer le débattement du train de la roue photographiée en fonction du véhicule identifié, la prise d'une photographie d'une roue est subordonnée au maintien du téléphone intelligent dans un plan perpendiculaire au plan de la roue photographiée sauf dans la position verticale du téléphone intelligent;
   (iii) déterminer le débattement du train opposé à la roue photographiée à l'étape (ii), soit par la mesure de l'angle d'inclinaison du véhicule après chargement, au moyen d'au moins un accéléromètre ou inclinomètre du téléphone intelligent, soit par la prise et le traitement, au moyen de l'appareil photographique du téléphone intelligent, d'une photographie d'au moins une roue avec au moins un point du véhicule amené à s'enfoncer conjointement lors du chargement du véhicule avec la suspension d'une roue du train opposé au train de la roue photographiée à l'étape (ii) ;
   (iv) calculer au moyen d'une unité de calcul du téléphone intelligent, la valeur de charge sur le train de la roue photographiée et la valeur de charge sur le train opposé en fonction du débattement respectif de ces trains, pour déterminer la valeur de charge totale du véhicule ;
   (v) informer l'utilisateur au moyen du téléphone intelligent de l'état de charge du véhicule.

2. Procédé d'estimation de la masse d'un véhicule selon la revendication 1, pour lequel le traitement de la photographie comporte au moins une étape de calcul d'un invariant.

3. Procédé d'estimation de la masse d'un véhicule selon la revendication 1 ou 2, **caractérisé en ce que** le calcul de l'invariant est un birapport effectué sur au moins un point de la roue et au moins un point du véhicule amené à s'enfoncer conjointement lors du chargement du véhicule avec la suspension de la roue du véhicule.

4. Procédé d'estimation de la masse d'un véhicule selon l'une des revendications 1 à 3, **caractérisé en ce que** l'étape (i) d'identification du véhicule comprend les étapes consistant à :

   (i.1) déterminer avant chargement la distance entre le centre de roue et le centre de passage de roue de la roue à photographier à l'étape (ii) ;
   (i.2) déterminer l'angle d'inclinaison du véhicule avant chargement ;

(i.3) déterminer la charge totale admissible du véhicule identifié.

**5.** Procédé d'estimation de la masse d'un véhicule selon la revendication 6, **caractérisé en ce que** l'étape (ii) de prise et traitement d'image comprend les sous étapes suivantes consistant à :

(ii.0) prendre une photographie d'une roue du véhicule ;
(ii.1) transformer la photographie de roue prise en une image en niveaux de gris ;
(ii.2) appliquer un premier filtre de type flou gaussien pour améliorer la qualité de piqué de l'image ;
(ii.3) appliquer un deuxième filtre de type Sobel pour obtenir les contours de l'image ;
(ii.4) décomposer l'image en deux parties, une première partie relative à la roue et une deuxième partie relative au passage de roue ;
(ii.5) calculer le centre et le rayon du passage de roue par le méthode des moindres carrés ;
(ii.6) calculer les valeurs de rayons minimum et maximum de la roue en fonction du rayon du passage de roue et du véhicule identifié ;
(ii.7) appliquer un troisième filtre de type ondelette chapeau mexicain pour améliorer la concentration de points proches du centre de la roue ;
(ii.8) calculer le centre de la roue en se basant sur l'accumulation de points dans le centre de la roue, calculer la distance après chargement entre le centre de roue et le centre de passage de roue, calculer le birapport dudit au moins un point de la roue et dudit au moins un point du véhicule amené à s'enfoncer conjointement lors du chargement du véhicule avec la suspension de la roue du véhicule ;
(ii.9) calculer le débattement du train de la roue photographiée au moyen de la différence de distance entre le centre de roue et le centre de passage de roue après et avant chargement.

**6.** Procédé d'estimation de la masse d'un véhicule selon la revendication 6 ou 7, **caractérisé en ce que** l'étape (iii) de détermination du débattement du train opposé est basée sur une mesure de la différence de l'angle d'inclinaison du véhicule avant et après chargement, l'angle d'inclinaison étant choisi comme l'angle entre un repère terrestre et un repère véhicule selon l'axe X du véhicule.

**7.** Procédé d'estimation de la masse d'un véhicule selon la revendication 8, **caractérisé en ce que** durant l'étape (iii) de mesure de l'angle d'inclinaison, toute détection d'une accélération au-delà d'un certain seuil prédéfini est considérée comme une chute du ttéléphone intelligent, l'étape (iii) de mesure devant être réitérée.

**8.** Procédé d'estimation de la masse d'un véhicule selon l'une des revendications 1 à 9, **caractérisé en ce que** l'étape (iv) de calcul de la valeur de charge sur les trains de roue avant et arrière est obtenue par interpolation dans une cartographie charge / débattement.

**9.** Téléphone intelligent (10) configuré pour permettre la mise en oeuvre du procédé selon l'une quelconque des revendications précédentes, **caractérisé en ce que** le téléphone intelligent comprend :

- une application (14) programmée adaptée pour activer un procédé d'estimation de la masse d'un véhicule,
- une interface homme machine (16) adaptée pour lancer l'application d'estimation de la masse d'un véhicule,
- des moyens d'identification du véhicule,
- un appareil photographique (20) adapté pour prendre une photographie d'au moins une roue avec au moins un point du véhicule amené à s'enfoncer conjointement lors du chargement du véhicule avec la suspension de la roue du véhicule,
- au moins un accéléromètre (22) et/ou inclinomètre (24) adapté pour mesurer un angle d'inclinaison entre le repère terrestre et le repère véhicule,
- une unité de calcul (12) programmée pour effectuer des étapes de traitement d'image et de calcul de valeurs de débattement et de valeurs de charge dont au moins une étape de calcul d'au moins un invariant, et
- au moins une interface graphique et/ou sonore (26) adaptée pour avertir l'utilisateur de l'état de charge de son véhicule.

**Patentansprüche**

**1.** Verfahren zur Schätzung des Gewichts eines Kraftfahrzeugs, das eine Vorderachse und eine Hinterachse umfasst, mithilfe eines Smartphones nach dem Beladen des Fahrzeugs, wobei das Verfahren die folgenden Schritte umfasst:

(i) Identifizieren des Fahrzeugs im Smartphone;

(ii) Aufnehmen und Bearbeiten, mithilfe eines Fotoapparats des Smartphones, einer Fotografie mindestens eines Rads, wobei mindestens ein Punkt des Fahrzeugs veranlasst wird, sich während der Beladung des Fahrzeugs zusammen mit der Radaufhängung des Fahrzeugs nach der Beladung nach unten zu bewegen, um die Verschiebung der fotografierten Radachse in Abhängigkeit vom identifizierten Fahrzeug zu bestimmen, wobei das Aufnehmen einer Fotografie eines Rads dem Halten des Smartphones in einer senkrecht zur Ebene des fotografierten Rads verlaufenden Ebene untergeordnet ist, ausgenommen in der vertikalen Stellung des Smartphones;

(iii) Bestimmen der Verschiebung der Achse gegenüber dem in Schritt (ii) fotografierten Rad entweder durch das Messen des Neigungswinkels des Fahrzeugs nach dem Beladen mithilfe mindestens eines Beschleunigungsmessers oder Neigungsmessers des Smartphones oder durch das Aufnehmen und Bearbeiten, mithilfe des Fotoapparats des Smartphones, einer Fotografie von mindestens einem Rad, wobei mindestens ein Punkt des Fahrzeugs veranlasst wird, sich bei der Beladung des Fahrzeugs zusammen mit einer Radaufhängung der Achse gegenüber der in Schritt (ii) fotografierten Radachse nach unten zu bewegen;

(iv) Berechnen, mithilfe einer Recheneinheit des Smartphones, des Werts der Last auf die fotografierte Radachse und des Werts der Last auf die gegenüberliegende Achse in Abhängigkeit von der jeweiligen Verschiebung dieser Achsen, um den Wert der Gesamtlast des Fahrzeugs zu bestimmen;

(v) Informieren des Nutzers mithilfe des Smartphones über den Beladungszustand des Fahrzeugs.

2. Verfahren zur Schätzung des Gewichts eines Kraftfahrzeugs nach Anspruch 1, bei dem die Bearbeitung der Fotografie mindestens einen Schritt der Berechnung einer Invariante umfasst.

3. Verfahren zur Schätzung des Gewichts eines Fahrzeugs nach Anspruch 1 oder 2, **dadurch gekennzeichnet, dass** die Berechnung der Invariante ein Doppelverhältnis an mindestens einem Punkt des Rades und mindestens einem Punkt des Fahrzeugs ist, der veranlasst wird, sich während der Beladung des Fahrzeugs zusammen mit der Radaufhängung des Fahrzeugs nach unten zu bewegen.

4. Verfahren zur Schätzung des Gewichts eines Fahrzeugs nach einem der Ansprüche 1 bis 3, **dadurch gekennzeichnet, dass** der Schritt (i) zur Identifikation des Fahrzeugs die folgenden Schritte umfasst:

(i.1) Bestimmen, vor der Beladung, des Abstands zwischen der Mitte des Rads und der Mitte des Radkastens des Rads, das in Schritt (ii) fotografiert werden soll;
(i.2) Bestimmen des Neigungswinkels des Fahrzeugs vor der Beladung;
(i.3) Bestimmen der zulässigen Gesamtlast des identifizierten Fahrzeugs.

5. Verfahren zur Schätzung des Gewichts eines Fahrzeugs nach Anspruch 6, **dadurch gekennzeichnet, dass** der Schritt (ii) zum Aufnehmen und Bearbeiten eines Bilds die folgenden Unterschritte umfasst:

(ii.0) Aufnehmen einer Fotografie eines Rads des Fahrzeugs;
(ii.1) Umwandeln der aufgenommenen Fotografie des Rads in ein Graustufenbild;
(ii.2) Anwenden eines ersten Gaußschen Unschärfefilters, um die Bildschärfe zu verbessern;
(ii.3) Anwenden eines zweiten Filters vom Typ Sobel-Filter, um die Konturen des Bilds zu erhalten;
(ii.4) Teilen des Bilds in zwei Teile, einen ersten Teil, der sich auf das Rad bezieht und einen zweiten Teil, der sich auf den Radkasten bezieht;
(ii.5) Berechnen der Mitte und des Radius des Radkastens mit der Methode der kleinsten Quadrate;
(ii.6) Berechnen der Werte der minimalen und maximalen Radien des Rads in Abhängigkeit vom Radius des Radkastens und vom identifizierten Fahrzeug;
(ii.7) Anwenden eines dritten Filters vom Typ Wavelet, Sombrero, um die Konzentration der Punkte in der Nähe der Mitte des Rads zu verbessern;
(ii.8) Berechnen der Mitte des Rads auf der Basis der Akkumulation von Punkten in der Mitte des Rades, Berechnen des Abstands nach der Beladung zwischen der Mitte des Rads und der Mitte des Radkastens, Berechnen des Doppelverhältnisses des mindestens einen Punkts des Rades und des mindestens einen Punkts des Fahrzeugs, der veranlasst wird, sich während der Beladung des Fahrzeugs zusammen mit der Radaufhängung des Fahrzeugs nach unten zu bewegen;
(ii.9) Berechnen der Verschiebung der fotografierten Radachse mithilfe der Differenz des Abstands zwischen der Mitte des Rads und der Mitte des Radkastens nach und vor der Beladung.

6. Verfahren zur Schätzung des Gewichts eines Fahrzeugs nach Anspruch 6 oder 7, **dadurch gekennzeichnet, dass** der Schritt (iii) zur Bestimmung der Verschiebung der gegenüberliegenden Achse auf einer Messung der Differenz des Neigungswinkels des Fahrzeugs vor und nach der Beladung basiert, wobei der Neigungswinkel ausgewählt ist als Winkel zwischen einem terrestrischen Bezugspunkt und einem Fahrzeugbezugspunkt gemäß der Achse X des Fahrzeugs.

7. Verfahren zur Schätzung des Gewichts eines Fahrzeugs nach Anspruch 8, **dadurch gekennzeichnet, dass** während des Schritts (iii) zum Messen des Neigungswinkels jeder Nachweis einer Beschleunigung über einen bestimmten vordefinierten Schwellenwert hinaus als ein Herunterfallen des Smartphones angesehen wird, wobei der Schritt (iii) zum Messen wiederholt werden muss.

8. Verfahren zur Schätzung des Gewichts eines Fahrzeugs nach einem der Ansprüche 1 bis 9, **dadurch gekennzeichnet, dass** der Schritt (iv) zum Berechnen des Werts der Last auf den Vorder- und Hinterachsen durch Interpolation in einer Last/Verschiebungskartographie erhalten wird.

9. Smartphone (10), das konfiguriert ist, um die Durchführung des Verfahrens nach einem der vorhergehenden Ansprüche zu ermöglichen, **dadurch gekennzeichnet, dass** das Smartphone Folgendes umfasst:

   - eine programmierte Anwendung (14), die geeignet ist, ein Verfahren zur Schätzung des Gewichts eines Fahrzeugs zu aktivieren,
   - eine Mensch-Maschine-Schnittstelle (16), die geeignet ist, die Anwendung zur Schätzung des Gewichts eines Fahrzeugs zu starten,
   - Einrichtungen zur Identifikation des Fahrzeugs,
   - einen Fotoapparat (20), der geeignet ist, eine Fotografie von mindestens einem Rad aufzunehmen, wobei mindestens ein Punkt des Fahrzeugs veranlasst wird, sich während der Beladung des Fahrzeugs zusammen mit der Radaufhängung des Fahrzeugs nach unten zu bewegen,
   - mindestens einen Beschleunigungsmesser (22) und/oder einen Neigungsmesser (24), der geeignet ist, einen Neigungswinkel zwischen dem terrestrischen Bezugspunkt und dem Fahrzeugbezugspunkt zu messen,
   - eine Rechnereinheit (12), die programmiert ist, um Schritte zur Bildbearbeitung und zur Berechnung von Verschiebungswerten und Lastwerten durchzuführen, umfassend mindestens einen Schritt der Berechnung mindestens einer Invariante, und
   - mindestens eine grafische und/oder akustische Schnittstelle (26), die geeignet ist, den Nutzer über den Beladungszustand seines Fahrzeugs in Kenntnis zu setzen.

## Claims

1. Method for estimating the weight of a motor vehicle comprising a front wheel assembly and a rear wheel assembly, using a smartphone, after the loading of the vehicle, the method comprising the steps of:

   (i) identifying the vehicle in the smartphone;
   (ii) using a camera of the smartphone to capture and process a photograph of at least one wheel with at least one point of the vehicle brought to sink down jointly upon the loading of the vehicle with the suspension of the wheel of the vehicle, after loading, in order to determine the clearance of the wheel assembly of the photographed wheel as a function of the identified vehicle, the taking of a photograph of a wheel is subordinate to keeping the smartphone in a plane at right angles to the plane of the photographed wheel except in the vertical position of the smartphone;
   (iii) determining the clearance of the wheel assembly opposite the wheel photographed in step (ii), either by measuring the angle of inclination of the vehicle after loading, using at least one accelerometer or inclinometer of the smartphone, or by capturing and processing a photograph of at least one wheel with at least one point of the vehicle brought to sink down jointly upon the loading of the vehicle with the suspension of a wheel of the wheel assembly opposite the wheel assembly of the wheel photographed in step (ii), using the camera of the smartphone;
   (iv) using a calculation unit of the smartphone to calculate the load value on the wheel assembly of the photographed wheel and the load value on the opposite wheel assembly as a function of the respective clearances of these wheel assemblies, to determine the total load value of the vehicle;
   (v) using the smartphone to inform the user of the load state of the vehicle.

2. Method for estimating the weight of a vehicle according to Claim 1, for which the processing of the photograph comprises at least one step of calculation of an invariant.

3. Method for estimating the weight of a vehicle according to Claim 1 or 2, **characterized in that** the calculation of the invariant is a crossratio performed on at least one point of the wheel and at least one point of the vehicle brought to sink down jointly upon the loading of the vehicle with the suspension of the wheel of the vehicle.

4. Method for estimating the weight of a vehicle according to one of Claims 1 to 3, **characterized in that** step (i) of identifying the vehicle comprises the steps of:

(i.1) determining, before loading, the distance between the wheel center and the center of the wheel housing of the wheel to be photographed in step (ii);
(i.2) determining the angle of inclination of the vehicle before loading;
(i.3) determining the total permissible load of the identified vehicle.

5. Method for estimating the weight of a vehicle according to Claim 6, **characterized in that** step (ii) of capturing and processing the image comprises the following substeps of:

(ii.0) taking a photograph of a wheel of the vehicle;
(ii.1) converting the captured photograph of the wheel to a grayscale image;
(ii.2) using a first filter of the fuzzy Gaussian type to improve the sharpness of the image;
(ii.3) using a second filter of the Sobel type to obtain the contours of the image;
(ii.4) breaking down the image into two parts,
namely a first part relating to the wheel and a second part relating to the wheel housing;
(ii.5) calculating the center and the radius of the wheel housing by the least squares method;
(ii.6) calculating the values of the minimum and maximum radii of the wheel as a function of the radius of the wheel housing and of the identified vehicle;
(ii.7) using a third filter of the Mexican hat wavelet type to improve the concentration of points near the center of the wheel;
(ii.8) calculating the center of the wheel on the basis of the accumulation of points in the wheel center, calculating the distance after loading between the wheel center and the center of the wheel housing, calculating the crossratio of said at least point of the wheel and of at least one point of the vehicle brought to sink down jointly upon the loading of the vehicle with the suspension of the wheel of the vehicle;
(ii.9) calculating the clearance of the wheel assembly of the photographed wheel, using the difference in distance between the wheel center and the center of the wheel housing after and before loading.

6. Method for estimating the weight of a vehicle according to Claim 6 or 7, **characterized in that** step (iii) of determining the clearance of the opposite wheel assembly is based on a measurement of the difference in the angle of inclination before and after loading, the angle of inclination being chosen as the angle between a terrestrial reference frame and a vehicle reference frame along the X axis of the vehicle.

7. Method for estimating the weight of a vehicle according to Claim 8, **characterized in that**, during step (iii) of measuring the angle of inclination, any detection of an acceleration beyond a certain predetermined threshold is considered to indicate that the smartphone has been dropped, and step (iii) must be repeated.

8. Method for estimating the weight of a vehicle according to one of Claims 1 to 9, **characterized in that** step (iv) of calculating the load value on the front and rear wheel assemblies is executed by interpolation in a load/clearance map.

9. Smartphone (10) configured for the execution of the method according to any of the preceding claims, **characterized in that** the smartphone comprises

- a programmed application (14) suitable for activating a method for estimating the weight of a vehicle,
- a human-machine interface (16) suitable for starting the application for estimating the weight of a vehicle,
- means for identifying the vehicle,
- a camera (20) suitable for taking a photograph of at least one wheel with at least one point of the vehicle brought to sink down jointly upon the loading of the vehicle with the suspension of the wheel of the vehicle,
- at least one accelerometer (22) and/or inclinometer (24) suitable for measuring an angle of inclination between the terrestrial reference frame and the vehicle reference frame,
- a calculation unit (12) programmed to execute steps of image processing and calculation of clearance values and load values including at least one step of calculating at least one invariant, and
- at least one graphic and/or audio interface (26) suitable for alerting the user to the load state of his vehicle.

Fig. 1

Fig. 2

Fig. 3

Fig. 4

Fig. 5

Fig. 6A

Fig. 6B

Fig. 7A

Fig. 7B

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20110267200 A **[0003]**
- DE 2640283 **[0003]**
- FR 1257425 **[0003]**